## Europäisches Patentamt
## European Patent Office
## Office européen des brevets

(19)

(11) Numéro de publication: **0 241 353**
**B1**

(12)

# FASCICULE DE BREVET EUROPEEN

(45) Date de publication du fascicule du brevet:
04.10.89

(51) Int. Cl.⁴: **F16F 13/00**, F16F 9/46

(21) Numéro de dépôt: 87400708.1

(22) Date de dépôt: 31.03.87

(54) Perfectionnements aux supports antivibratoires de type hydraulique.

(30) Priorité: 07.04.86 FR 8604929

(43) Date de publication de la demande:
14.10.87 Bulletin 87/42

(45) Mention de la délivrance du brevet:
04.10.89 Bulletin 89/40

(84) Etats contractants désignés:
CH DE ES FR GB IT LI NL SE

(56) Documents cités:
EP-A- 0 155 646
DE-A- 2 428 326
DE-A- 3 316 025
DE-A- 3 340 152

PATENT ABSTRACTS OF JAPAN,
vol. 10, no. 100 (M-470)[2157], 16th April 1986; &
JP-A-60 234 143 (TOYODA GOSEI K.K.) 20-11-1985
Idem

(73) Titulaire: HUTCHINSON, 2 rue Balzac, F-75008 Paris(FR)

(72) Inventeur: Bellamy, Alain, 2, Impasse du Lubidet,
F-41100 Vendome(FR)
Inventeur: Jouade, Pierre, 21 rue du mont Barry La
Fringale, La Chapelle du Noyer F-28200 Chateaudun(FR)

(74) Mandataire: Behaghel, Pierre et al, CABINET
PLASSERAUD 84 rue d'Amsterdam, F-75009 Paris(FR)

**Description**

L'invention concerne les dispositifs antivibratoires destinés à être interposés aux fins de support et d'amortissement entre deux éléments rigides individuellement soumis à certaines oscillations ou vibrations, éléments tels que par exemple un châssis de véhicule et le moteur de ce véhicule, l'amortissement faisant intervenir le battement d'une masse de liquide à travers n passge étranglé appelé ci-après "ajutage", à une fréquence de résonance qui est fonction des dimensions dudit ajutage et en particulier du rapport entre sa longueur axiale et sa section droite.

L'invention concerne plus particulièrement, parmi les supports du genre en question, ceux qui sont constitués par un boîtier étanche interposé entre les deux éléments rigides, boîtier comportant une embase rigide solidarisable avec l'un des éléments rigides, un anneau rigide solidarisable avec l'autre élément rigide, une paroi annulaire élastique de support offrant une bonne résistance à la compression axiale et reliant de manière étanche l'embase rigide à l'anneau rigide et une membrane flexible raccordée de manière étanche à l'anneau rigide, l'intérieur du boîtier divisé par une cloison de séparation en deux chambres, savoir une chambre de travail située du côté de la paroi élastique et une chambre de compensation située du côté de la membrane flexible, ces deux chambres communiquant entre elles en permanence par l'ajutage, lequel est généralement aménagé dans la cloison de séparation ou autour de cette cloison, et étant remplies de liquide ainsi que cet ajutage.

Dans les réalisations connues, le rapport entre la longueur et le diamètre moyen de l'ajutage, compris entre 2 et 100, est généralement déterminé une fois pour toutes en fonction de la fréquence F des oscillations que l'on désire amortir au maximum.

Une telle formule présente l'inconvénient que ladite fréquence F est unique: en d'autre termes, s'il s'agit d'amortir les vibrations d'un moteur dont la fréquence varie de 50 à 200 Hz en fonction du régime de fonctionnement de ce moteur, les supports considérés n'assurent un bon amortissement que pour l'une F des valeurs de cette gamme de fréquences et pour les valeurs voisines de F, mais pas pour les autres valeurs.

Pour remédier à cet inconvénient, il a déjà été proposé de modifier, au cours même du fonctionnement du support, le rapport entre la longueur et la section de l'ajutage de façon à rapprocher la fréquence d'accord F correspondant à l'amortissement maximum dudit support de la fréquence réelle G des oscillations principales à amortir.

Il a même été proposé de rendre automatiquement ces deux fréquences F et G égales à chaque instant en prévoyant des moyens pour détecter la fréquence des oscillations réelles imposées au support et des moyens pour modifier automatiquement le rapport longueur/section ci-dessus en fonction du résultat de cette détection.

C'est à ces supports réglables au cours même de leur fonctionnement, c'est-à-dire après leur mise en place entre l'élément rigide porteur et l'élément rigide porté, que la présente invention se rapporte, aussi bien dans le cas où le réglage considéré est assuré automatiquement que dans le cas où il est assuré manuellement.

Dans des modes de réalisation connus de ces supports réglables (voir par exemple le document DE-A 3 316 025), le rapport longueur/section de l'ajutage est modifié en obturant plus ou moins un tronçon de ce passage formant un siège annulaire rigide par un clapet rigide déplacé axialement en regard dudit siège.

Les expériences conduites avec ces réalisations à clapet rigide n'ont pas donné satisfaction pour des raisons qui ne sont pas totalement élucidées et parmi lesquelles on peut citer la difficulté de positionner avec précision le clapet rigide vibrant par une chaîne d'organes cinématiques soumise elle-même aux vibrations.

Il a également été proposé, pour modifier le rapport longueur/section de l'ajutage dans un amortisseur d'un genre ne correspondant pas à celui selon l'invention, de délimiter cet ajutage par une paroi tubulaire déformable et de déformer cette paroi par application externe d'un liquide contre celle-ci. Mais le réglage ainsi obtenu permettait tout au plus de compenser les variations de la fréquence de résonance dues aux variations de la température et non pas de changer cette fréquence en fonction des besoins (document DE-A 2 428 326).

L'invention a pour but, surtout, de remédier aux inconvénients indiqués ci-dessus.

A cet effet, dans les supports anti-vibratoires hydrauliques du genre ci-dessus selon l'invention, l'ajutage est encore délimité au moins en partie par une paroi déformable et les moyens pour modifier le rapport longueur/section dudit ajutage sont encore agencés de façon à déformer ladite paroi, et ces supports. sont essentiellement caractérisés en ce que la paroi déformable est constituée par un morceau de la cloison de séparation, alors formée en matériau élastomère, et en ce que les moyens de réglage comportent un tirant rigide reliant un point de cette paroi à un organe de commande extérieur au support.

L'invention comprend, mise à part cette disposition principale, certaines autres dispositions qui s'utilisent de préférence en même temps et dont il sera plus explicitement question ci-après.

Dans ce qui suit, l'on va décrire un mode de réalisation de l'invention en se référant au dessin ci-annexé d'une manière bien entendu non limitative.

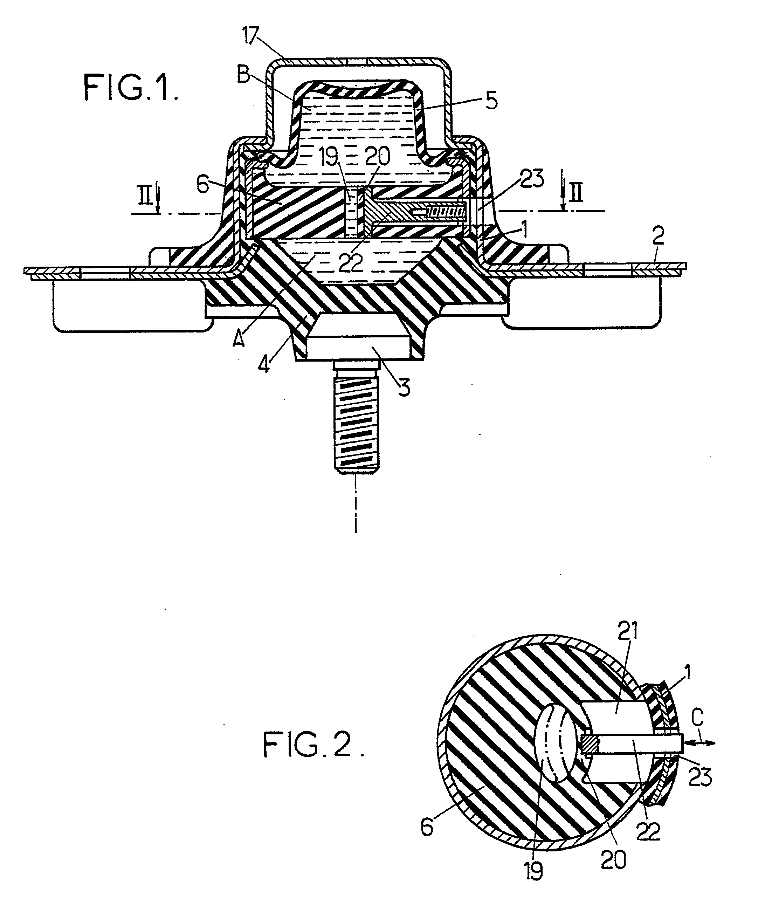

Les figure 1 et 2, de ce dessin, montrent respectivement en coupe axiale et en coupe transversale partielle selon II–II, figure 1, un support antivibratoire hydraulique établi conformément à l'invention.

Le support considéré est destiné à être interposé entre un organe porteur rigide tel qu'un châssis de véhicule et un organe supporté rigide tel qu'un moteur à combustion interne.

Ce support se présente sous la forme générale d'un boîtier étanche de révolution autour d'un axe X et comportant, d'une façon connue en soi:

– une armature annulaire 1 prolongée radialement par deux pattes perforées 2 solidarisables, notamment par boulonnage, avec l'organe porteur,

– un corps rigide 3 se présentant ici sous la forme d'un boulon dont la portion filetée s'étend vers le bas, boulon solidarisable avec l'organe supporté,

– une paroi tronconique épaisse et étanche 4 en matériau élastomère adhérée respectivement sur l'armature 1 et sur le corps 3 et propre à résister élastiquement à la compression axiale et à la flexion transversale,

– et une membrane flexible étanche 5 dont le pourtour est fixé de façon étanche sur l'armature annulaire 1.

Une cloison étanche 6 divise l'intérieur du boîtier en deux chambres A et B toutes les deux remplies de liquide, savoir une chambre A, de travail, disposée du côté de la paroi 4 et une chambre B, de compensation, disposée du côté de la membrane 5.

Un capot de protection métallique 17, dont le bord est fixé sur l'armature annulaire 1, entoure la membrane 5.

Dans le mode réalisation schématisé sur les figures 1 et 2, la cloison 6 est constituée par une galette cylindrique en matériau élastomère évidée dans sa zone centrale par un ajutage cylindrique 19.

Les génératrices du cylindre définissant cet ajutage sont parallèles à l'axe X du support et sa section droite présente une forme allongée variable comprise entre une ellipse (représentée en trait pleins sur la figure 2) et un haricot (traits mixtes).

A cet effet l'une des faces allongées définissant l'ajutge délimite une paroi amincie 20 en élastomère faisant partie de la galette 6.

En d'autres termes, une poche 21 est évidée dans cette galette de façon à former cette paroi amincie 20.

A l'intérieur de cette poche est logé un tirant rigide 22 dont une extrémité élargie est adhérée à la paroi 20 et dont l'autre extrémité est reliée à un organe de commande extérieur tel qu'un câble sous gaine de type Bowden, organe schématisé par le symbole C.

Cet organe C traverse des lumières 23 évidées latéralement dans le support sans nuire à l'étanchéité des deux chambres remplies de liquide de ce support.

En agissant sur l'organe C, on fait varier la section droite de l'ajutage 19 et donc la fréquence F de résonance correspondant à la masse de liquide contenue dans cet ajutage.

Or, comme indiqué précédemment, parmi les vibrations ou oscillations imposées au support, ce sont précisément celles dont la fréquence est égale à ladite valeur F qui sont amorties ou filtrées au maximum par ledit support, puisque ce sont celles-là qui provoquent la résonance de la masse liquide considérée, présente dans l'ajutage.

On dispose ainsi d'un moyen extrêmement simple et souple pour modifier ladite fréquence F en fonction des besoins.

On peut asservir le réglage de la section de l'ajutage à la fréquence des oscillations à amortir.

A cet effet, l'on peut prévoir des moyens pour détecter à chaque instant la fréquence réelle des oscillations imposées au support et asservir les moyens de réglage à la valeur ainsi détectée pour cette fréquence réelle.

Dans les modes de réalisation pour lesquels le support est destiné à amortir les vibrations d'un moteur, la détection de fréquence ci-dessus est avantageusement assurée en détectant la vitesse de rotation de l'arbre moteur à l'aide d'un tachymètre ou compte-tour approprié. Mais elle pourrait également être assurée de façon indirecte, en étant basée sur les variations d'un paramètre lié à ladite vitesse tel que par exemple la dépression régnant dans la tubulure d'admission du moteur.

En suite de quoi, et quel que soit le mode de réalisation adopté, on dispose finalement d'un support antivibratoire hydraulique susceptible d'être adapté à l'amortissement d'oscillations de fréquences différentes, même en cours de fonctionnement, de façon à tenir compte des besoins réels instantanés.

## Revendications

Dispositif antivibratoire destiné à être interposé aux fins de support et d'amortissement entre deux éléments rigides, constitué par un boîtier étanche interposé entre les deux éléments rigides, boîtier comportant une embase rigide (3) solidarisable avec l'un des éléments rigides, un anneau rigide (1) solidarisable avec l'autre élément rigide, une paroi annulaire élastique de support (4) offrant une bonne résistance à la compression axiale et reliant de manière étanche l'embase rigide à l'anneau rigide et une membrane flexible (5) raccordée de manière étanche à l'anneau rigide, l'intérieur du boîtier étant divisé par une cloison de séparation (6) en deux chambres, savoir une chambre de travail (A) située du côté de la paroi élastique et une chambre de compensation (B) située du côté de la membrane flexible, ces deux chambres communiquant entre elles en permanence par un ajutage (19) et étant remplies de liquide ainsi que cet ajutage, des moyens étant prévus pour modifier et régler l'une des dimensions de l'ajutage même au cours du fonctionnement du dispositif, caractérisé en ce que ledit ajutage est délimité au moins en partie par une paroi déformable (20), en ce que la paroi déformable (20) est constituée par un morceau de la cloison de séparation (6), alors formée en matériau élastomère, et en ce que les moyens de réglage comportent un tirant rigide (22) reliant un point de cette paroi à un organe de commande (C) extérieur au support.

## Patentansprüche

Hydraulisches Antischwingungslager, das zur Abstützung und Dämpfung zwischen zwei starren Elementen eingefügt wird und aus einem dichten Gehäuse besteht, das zwischen den starren Elementen eingesetzt ist und die folgende Teile enthält: ein starres Stück (3), das an einem der starren Elemente anbringbar ist, einen statten Ring (1), der an dem anderen starren Element anbringbar ist, eine elastische ringförmige Stützwandung (4) mit ausreichender Druckfestigkeit in axialer Richtung, die das starre Stück dicht mit dem starren Ring verbindet und eine biegsame Membran (15), die dicht mit dem starren Ring verbunden ist, wobei der Innenraum des Gehäuses durch eine Trennwand (6) in zwei Kammern unterteilt ist, nämlich eine Arbeitskammer (A) auf der Seite der elastischen Wandung und eine Ausgleichskammer (B) auf der Seite der biegsamen Membran, die beiden Kammern, dauernd miteinander über einen engen Durchtritt (19) verbunden und ebenso wie der Durchtritt mit einem flüssigen Medium gefüllt sind, wobei Einrichtungen vorgesehen sind, um eine der Abmessungen des Durchtrittes selbst während des Betriebs der Vorrichtung zu verändern und stellen, dadurch gekennzeichnet, dass der enge Durchtritt wenigstens teilweise durch eine deformierbare Wandung (20) begrenzt ist, dass die deformierbare Wandung (20) aus einem Abschnitt der Trennwand (6) besteht, die aus einem elastomeren Material gebildet ist und dass die Einstelleinrichtungen eine starre Stange (22) enthalten, die eine Stelle der deformierbaren Wandung mit einem Steuerorgan (C) verbindet, das ausserhalb des Lagers angeordnet ist.

## Claims

Antivibratory device intended to be interposed, for support and damping purposes, between two rigid elements, formed by a sealed case interposed between the two rigid elements, which case includes a rigid base (3) fixable to one of the rigid elements, a rigid ring (1) fixable to the other rigid element, a resilient annular support wall (4) offering good resistance to axial compression and sealingly connecting the rigid base to the rigid ring and a flexible membrane (5) sealingly connected to the rigid ring, the inside of the case being divided by a separation wall (6) into two chambers, namely a work chamber (A) situated on the resilient wall side and a compensation chamber (B) situated on the flexible membrane side, these two chambers communicating permanently together through a restricted passage (19) and being filled with liquid as well as this passage, means being provided for modifying and adjusting one of the dimensions of the passage even during operation of the device, characterized in that said passage is defined at least partially by a deformable wall (20), in that the deformable wall (20) is formed by a part of the separation wall (6), then made from an elastomer material, and in that the adjustment means include a rigid tie rod (22) connecting a point of this wall to a control member (C) external to the support.

FIG.1.

17

B

5

19  20

6

23

II

II

1

2

22

A

4

3

FIG.2.

21

1

C

6

23

22

19  20